# EUROPÄISCHE PATENTSCHRIFT

(11) **EP 1 970 239 B1**
(45) Veröffentlichungstag und Bekanntmachung des Hinweises auf die Patenterteilung: **30.12.2009**
(21) Anmeldenummer: 08003768.2
(22) Anmeldetag: 29.02.2008
(51) Int. Cl.: B60K 6/40, F16D 13/52, F16D 25/0638, F16H 45/00

(54) **Hybrid-Antriebssystem**
Hybrid transmission system
Système d'entraînement hybride

(30) Priorität: 13.03.2007 DE 102007012012
(43) Veröffentlichungstag der Anmeldung: 17.09.2008
(73) Patentinhaber: ZF Friedrichshafen AG, 88038 Friedrichshafen (DE)
(72) Erfinder: Kleuker, Christoph, 97422 Schweinfurt (DE); Schmitt, Guido, 97714 Oerlenbach-Eltingshausen (DE); Matschas, Steffen, 97469 Gochsheim (DE); Reiser, Robert, 78359 Nenzingen (DE); Bartha, Alexander, Dr., 97082 Würzburg (DE)

(56) Entgegenhaltungen:
- EP-A- 1 710 113
- WO-A-02/085659
- WO-A-2006/089376
- DE-A1- 10 005 996
- DE-A1- 10 323 283
- US-A- 5 789 823

## Beschreibung

Die vorliegende Erfindung betrifft ein Hybrid-Antriebssystem für ein Kraftfahrzeug.

Bei derartigen Hybrid-Antriebssystemen sind im Allgemeinen zwei Bereiche vorhanden, in welchen eine Drehmomentübertragungsverbindung hergestellt bzw. unterbrochen werden kann. Zum einen ist ein als "Trennkupplung" wirkender Bereich vorhanden, welcher eine Entkopplung einer Elektromaschine von einem Antriebsaggregat, also z.B. einer Brennkraftmaschine, realisieren kann, um wahlweise mit einem der beiden Antriebe zu arbeiten. In dem zweiten Bereich wird folgend auf die Antriebe die Drehmomentübertragungsverbindung zum weiteren Bereich des Antriebsstrangs unterbrochen bzw. hergestellt, beispielsweise um Gänge schalten zu können.

Ein solches Hybrid-Antriebssystem ist aus der gattungsbildenden EP 1 710 113 A1 bekannt. Dieses Hybrid-Antriebssystem umfasst als Trennkupplung eine nasslaufende Lamellenkupplung mit einem Eingangsbereich, der über einen Torsionsschwingungsdämpfer mit einem Antriebsaggregat koppelbar ist, und einen Ausgangsbereich, der durch ein Gehäuse der Lamellenkupplung gebildet ist, das mit einem Übertragungsglied eines nachfolgenden Mehrstufengetriebes drehverbunden ist. Mit dem Gehäuse der Lamellenkupplung ist eine Rotoranordnung einer Elektromaschine zur gemeinsamen Drehung um eine Drehachse gekoppelt, während die Statoranordnung der Elektromaschine an einem Gehäuse des Mehrstufengetriebes befestigt ist. Das bereits genannte Übertragungsglied des Mehrstufengetriebes ist als Drehdurchführung für die Zufuhr und Abfuhr von Fluid in das Gehäuse der Lamellenkupplung und aus diesem Gehäuse wirksam, wobei für die Fluidförderung eine Fluidpumpe vorgesehen ist.

Die US 5,789,823 A lässt in Fig. 2 ein Hybrid-Antriebssystem mit einer Trennkupplung erkennen, deren Eingangsbereich an einem Antriebsaggregat angreift, während deren Ausgangsbereich mit einem Gehäuse eines hydrodynamischen Drehmomentwandlers verbunden ist, wobei an diesem Gehäuse eine Elektomaschine angreift. Ein am Gehäuse des hydrodynamischen Drehmomentwandlers anliegendes Drehmoment kann in Abhängigkeit vom Schaltzustand einer Überbrückungskupplung, entweder durch diese oder durch den hydrodynamischen Kreis, bestehend aus Pumpen-, Turbinen- oder Leitrad, an ein Mehrstufengetriebe übertragen werden. Der hydrodynamische Drehmomentwandler wirkt demnach als Anfahrkupplung.

Die WO 2006/089376 A1 zeigt zwar grundsätzlich die Verwendung einer durch einen Elektromotor separat angetriebenen Pumpe in einem über eine Elektromaschine verfügenden Antriebsstrang, jedoch lässt diese Veröffentlichung konstruktive Merkmale des Antriebsstranges weitgehend vermissen.

Es ist die Aufgabe der vorliegenden Erfindung, ein Hybrid-Antriebssystem vorzusehen, das zugunsten einer höheren Belastbarkeit eine Anfahrkupplung aufweist, die problemlos einbaubar und unabhängig vom jeweiligen Betriebszustand mit Fluid versorgbar ist.

Erfindungsgemäß wird diese Aufgabe gelöst durch die Merkmale des Anspruches 1.

Die vorliegende Erfindung kombiniert den Vorteil des geringen Massenträgheitsmoments einer nasslaufenden Lamellenkupplung als Trennkupplung zwischen einer Elektromaschine und einem Antriebsaggregat mit der hohen Drehmomentenbelastbarkeit eines hydrodynamischen Drehmomentwandlers als ein einem Getriebe vorgeschaltetes Anfahrelement.

Ein Ausgangsbereich der nasslaufenden Lamellenkupplung ist über ein Übertragungsglied mit dem Gehäuse des hydrodynamischen Drehmomentwandlers gekoppelt, wobei vorzugsweise dann auch eine Rotoranordnung der Elektromaschine vermittels dieses Übertragungsglieds mit dem Ausgangsbereich der nasslaufenden Lamellenkupplung gekoppelt ist.

Da die nasslaufende Lamellenkupplung unter Umständen auch dann zu betätigen ist, wenn der hydrodynamische Drehmomentwandler nicht rotiert, beispielsweise um eine Brennkraftmaschine zu starten, wird vorgeschlagen, dass eine unabhängig von dem Betriebszustand des hydrodynamischen Drehmomentwandlers arbeitende Fluidpumpe zum Zuführen/Abführen von Fluid zu/von der nasslaufenden Lamellenkupplung vorgesehen ist.

Eine einfache Koppelbarkeit des Übertragungslieds mit dem hydrodynamischen Drehmomentwandler ist dadurch realisierbar, dass das Gehäuse des hydrodynamischen Drehmomentwandlers mit dem Übertragungsglied durch Axialsteckverbindung gekoppelt ist.

Eine besonders platzsparende Anordnung kann dadurch erhalten werden, dass die Elektromaschine eine Innenläufermaschine ist. Dabei kann vorzugsweise vorgesehen sein, dass die Elektromaschine die nasslaufende Lamellenkupplung axial überlappt.

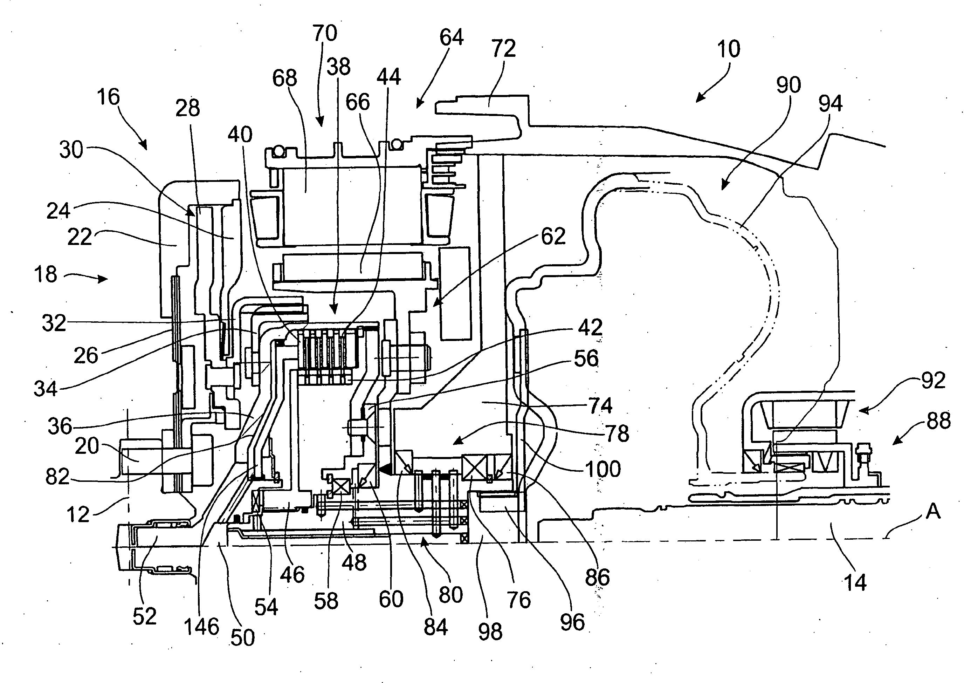

Die vorliegende Erfindung wird nachfolgend mit Bezug auf die beiliegende Fig. 1 beschrieben, welche eine Teil-Längsschnittansicht eines erfindungsgemäßen Hybrid-Antriebssystems zeigt.

In der Fig. 1 ist ein erfindungsgemäßes Hybrid-Antriebssystem allgemein mit 10 bezeichnet. Dieses Hybrid-Antriebssystem 10 stellt eine Drehmomentübertragungsverbindung zwischen einer Antriebswelle 12, also beispielsweise einer Kurbelwelle einer Brennkraftmaschine, und einer Getriebeeingangswelle 14, beispielsweise eines Automatikgetriebes, her.

Eine Torsionsschwingungsdämpferanordnung 16 des Hybrid-Antriebssystems 10 ist mit einer Primärseite 18 durch eine Mehrzahl von Schraubbolzen 20 an die Antriebswelle 12 angebunden. Die Primärseite 18 umfasst zwei Deckscheibenelemente 22, 24, von welchen das Deckscheibenelement 22 über eine elastische Anordnung 26, beispielsweise Blattfedern oder dergleichen, an die Antriebswelle 12 angebunden ist. Auf diese Art und Weise können Achsversätze bzw. Achsneigungen der beiden zu koppelnden Wellen 12, 14 kompensiert werden bzw. werden Taumelbewegungen grundsätzlich ermöglicht. Zwischen die beiden Deckscheibenelemente 22, 24 greift ein Zentralscheibenelement 28 einer Sekundärseite 30 ein. Über nicht dargestellte Dämpferelemente, beispielsweise Dämpferfedern oder dergleichen, sind die Primärseite 18 und die Sekundärseite 30 zur Drehung um die Drehachse A gekoppelt, können sich jedoch auch unter Kompression dieser Federn in Umfangsrichtung bezüglich einander verdrehen.

Radial innen ist das Zentralscheibenelement 28 mit einem mit Innenverzahnung versehenen Kopplungselement 32 beispielsweise durch Vernietung fest verbunden. Ein Gegenkopplungselement 34 steht in durch axiales Einschieben hergestelltem Kämmeingriff mit diesem Kopplungselement 32. Das Gegenkopplungselement 34 ist mit einem Gehäuse 36 einer allgemein mit 38 bezeichneten nasslaufenden Reibungskopplung durch Vernietung oder dergleichen fest verbunden.

Im Innenraum des Gehäuses 36, das einen Eingangsbereich und einen Außenlamellenträger für die Lamellenkupplung 38 bildet, sind mit diesem Gehäuse 36 drehfest gekoppelte Außenlamellen 40 sowie mit einem Innenlamellenträger 42 gekoppelte Innenlamellen 44 vorgesehen. Der Innenlamellenträger 42 bildet mit einem Nabenbereich 46 desselben einen Ausgangsbereich der nasslaufenden Lamellenkupplung 38. Durch ein axial verschiebbares Kolbenelement 146 können die Außenlamellen 40 und die Innenlamellen 44 in Reibeingriff gebracht werden und somit die Lamellenkupplung 38 in einen Drehmomentübertragungszustand gebracht werden.

Der Nabenbereich 46 des Innenlamellenträgers 42, der selbstverständlich auch als eigenständiges Bauteil ausgeführt sein kann, steht in Drehkopplungseingriff mit einem Übertragungsglied 48. Das Übertragungsglied 48 greift mit seinem axialen Endbereich in eine Aussparung 50 einer Gehäusenabe 52 des Gehäuses 36 der Lamellenkupplung 38 ein und ist dort drehbar und unter Herstellung eines fluiddichten Abschlusses gelagert. Diese Gehäusenabe 52 selbst ist wiederum in der Antriebswelle 12 beispielsweise über ein Pilotlager drehbar gelagert. Der Nabenbereich 46 des Innenlamellenträgers 42 ist über ein Axiallager 54 an dieser Gehäusenabe 52 axial abgestützt. An seiner von der Gehäusenabe 52 entfernten axialen Seite ist das Gehäuse 36 über ein Abstützelement 56 an dem Übertragungsglied 48 durch ein Lager 58 radial gelagert. Ferner ist durch eine Dichtungsanordnung 60 auf dieser Seite für einen fluiddichten Abschluss des Innenraums des Gehäuses 36 gesorgt. Somit besteht an zwei axial in Abstand zueinander liegenden Positionen eine Lagerungsverbindung zwischen dem Gehäuse 36 und dem Übertragungsglied 48, welche eine fluiddichte Abkapselung des Innenraums des Gehäuses 36 realisiert, gleichzeitig jedoch eine Verdrehbarkeit zwischen diesen beiden Baugruppen bezüglich einander zulässt.

Axial anschließend an das Gehäuse 36 der Lamellenkupplung 38 ist mit dem Übertragungsglied 48 beispielsweise durch Verschweißung eine Rotoranordnung 62 einer Elektromaschine 64 drehfest verbunden. Ein Rotorwechselwirkungsbereich 66 der Rotoranordnung 62 liegt radial innerhalb eines Statorwechselwirkungsbereichs 68 einer Statoranordnung 70 der Elektromaschine 64. Die Statoranordnung 70 kann an einer feststehenden Baugruppe, beispielsweise einem Getriebegehäuse 72 oder dergleichen, feststehend getragen sein.

Durch das Übertragungsglied 48 ist eine Drehverbindung zwischen dem Ausgangsbereich der Lamellenkupplung 38, also dem Innenlamellenträger 42 derselben, und der Rotoranordnung 62 der Elektromaschine 64 geschaffen. Dies bedeutet, dass im eingerückten Zustand der Lamellenkupplung 38 ein Drehmoment von der Elektromaschine 64 auf die Welle 12 übertragen werden kann, um auf diese Art und Weise beispielsweise eine Brennkraftmaschine zu starten.

Axial anschließend an die drehfeste Verbindung der Rotoranordnung 62 mit dem Übertragungsglied 48 ist dieses Übertragungsglied 48 an einer feststehenden, beispielsweise ebenfalls dem Gehäuse 72 getragenen Stützanordnung 74 vermittels eines nahe dem Endbereich des Übertragungsglieds 48 wirksamen Radiallagers 76 drehbar gelagert. Durch diese Stützanordnung 74 wird nicht nur eine definierte Lagerung des Übertragungsglieds 48 und somit auch der gesamten Lamellenkupplung 38 erhalten, sondern diese Stützanordnung 74 bildet in Verbindung mit dem Übertragungsglied 48 eine Drehdurchführung 78 für die Zufuhr und Abfuhr von Fluid in und aus dem Gehäuse 36 der Lamellenkupplung. Hierzu sind in dem Übertragungsglied 58 mehrere Fluidkanäle 80 ausgebildet, durch welche einerseits Fluid in einen Zwischenraum 82 gefördert werden kann, um den Kolben 46 zum Einrücken der Lamellenkupplung 38 zu beaufschlagen, und andererseits Fluid in den die Außenlamellen 40 und die Innenlamellen 44 enthaltenden Innenraum einzuleiten bzw. von dort abzuziehen. Diese Kanäle sind durch radial aus dem Übertragungsglied 48 austretende Stichkanäle zum Außenumfang des Übertragungsglieds 48 offen und liegen entsprechenden Kanälen in der Stützanordnung 74 somit gegenüber. Beidseits dieser einander gegenüberliegenden, offenen Kanäle sind Dichtungsanordnungen 84, 86 vorgesehen, die für einen fluiddichten Abschluss der Drehdurchführung 78 sorgen. Die in der Stützanordnung 74 vorgesehenen Kanäle, über welche also Fluid in die Lamellenkupplung 38 gefördert werden kann und von dieser abgezogen werden kann, stehen in Verbindung mit einer in der Fig. 1 rechts gezeigten und beispielsweise in einem Getriebe angeordneten Fluidpumpe 88. Diese ist, möglicherweise alternativ oder zusätzlich zu dem Antrieb durch einen noch zu beschreibenden hydrodynamischen Drehmomentwandler 90, durch einen elektromotorischen Antrieb 92 aktivierbar. Somit kann unabhängig davon, ob der hydrodynamische Drehmomentwandler 90 rotiert oder nicht, die Fluidpumpe 88 aktiviert werden, um beispielsweise die Lamellenkupplung 38 einzurücken. Dies ist insbesondere dann erforderlich, wenn ein Fahrzeug außer Betrieb ist und eine Brennkraftmaschine gestartet werden soll, was im Allgemeinen in einem Zustand passiert, in welchem der hydrodynamische Drehmomentwandler 90 nicht rotiert und somit die Pumpe 88 auch nicht antreiben kann. Beispielsweise kann durch eine einseitig wirkende Freilaufanordnung dafür gesorgt werden, dass dann, wenn der hydrodynamische Drehmomentwandler 90 auch rotiert, der Antrieb der Fluidpumpe 88 dann von diesem geliefert wird und der elektromotorische Antrieb 92 nicht mehr aktiviert werden muss.

Der hydrodynamische Drehmomentwandler 90 weist in bekannter Weise ein Gehäuse 94 auf, das an seiner dem Antriebsaggregat zugewandten Seite mit dem Übertragungsglied 48 zur gemeinsamen Drehung gekoppelt ist. Dies kann beispielsweise durch einen am Gehäuse 94 vorgesehenen axialen und mit Außenverzahnung versehenen Ansatz 96 erfolgen, der in eine entsprechende mit Innenverzahnung versehene Öffnung 98 am axialen Ende des Übertragungsglieds 48 eingreift. Es wird somit möglich, den hydrodynamischen Drehmomentwandler 90 einerseits und die Elektromaschine 64 mit der nasslaufenden Lamellenkupplung 38 andererseits als separate Baugruppen beim Zusammenbau eines Antriebsstrangs einzugliedern. Dabei kann zunächst, nachdem die Torsionsschwingungsdämpferanordnung 16 an der Antriebswelle 12 festgelegt worden ist, die Lamellenkupplung 38, die in diesem Zustand dann bereits mit dem Übertragungsglied 48 und der Rotoranordnung 62 zusammengefügt ist, axial an die Torsionsschwingungsdämpferanordnung 16 herangeführt werden, um den Kopplungseingriff zwischen dem Kupplungselement 32 und dem Gegenkopplungselement 34 zu realisieren. Darauf folgend kann dann, beispielsweise wenn auch die Stützanordnung 74 und die Statoranordnung 70 angefügt worden sind, der hydrodynamische Drehmomentwandler 90 axial herangeführt und in Drehkopplungseingriff mit dem Übertragungsglied 48 gebracht werden.

Es sei hier darauf hingewiesen, dass selbstverständlich die Drehkopplung auch über eine in der Fig. 1 angedeutete flexible Platte 100 erfolgen kann, so dass auch in diesem Bereich Taumelbewegungen kompensiert bzw. zugelassen werden können. Diese ist dann radial außen an das Gehäuse 94 und radial innen an den Ansatz 96 angebunden.

Das vorangehend beschriebene Hybrid-Antriebssystem 10 vereinigt verschiedene Vorteile. So ist zum Beispiel mit dem Einsatz einer nasslaufenden. Lamellenkupplung 38 eine sehr kompakte und mit geringem Massenträgheitsmoment versehene Trennkupplung zwischen den beiden Antrieben, also einem Antriebsaggregat und der Elektromaschine 64 vorgesehen. Da diese Lamellenkupplung 38 bereits über eine Torsionsschwingungsdämpferanordnung 16 an die Antriebswelle 12 angekoppelt ist, kann der hydrodynamische Drehmomentwandler 90 dann ohne eigenen Torsionsschwingungsdämpfer ausgebildet werden.

Die Kompaktheit des Systems wird dadurch noch unterstützt, dass die Elektromaschine 64 und die Lamellenkupplung 38 einander in axialer Richtung nahezu vollständig überlappen, wobei gleichzeitig auch die Elektromaschine 64 noch als Innenläufermaschine ausgebildet ist.

Der hydrodynamische Drehmomentwandler 90, der im Wesentlichen auch als Anfahrelement dient, ist auf Grund seiner Bauweise bzw. Funktionalität insbesondere für drehmomentenstarke Antriebssysteme geeignet, wie sie beispielsweise in Oberklasselimousinen, Geländefahrzeugen und dergleichen Anwendung finden. Da weiterhin die auch den hydrodynamischen Drehmomentwandler 90 mit Fluid versorgende Fluidpumpe 88 zumindest wahlweise mit einem eigenständigen elektromotorischen Antrieb 92 betrieben werden kann, wird die Lamellenkupplung 38 unabhängig vom Betriebszustand des hydrodynamischen Drehmomentwandlers 90 und kann somit auch im Stillstand des Systems, also bei nicht rotierendem Gehäuse 94 des hydrodynamischen Drehmomentwandlers 90, eingerückt und ausgerückt werden. Auch wird es damit möglich, insbesondere in der Startphase die verschiedenen mit Fluid zu befüllenden Innenräume im hydrodynamischen Drehmomentwandler 90 und in der Lamellenkupplung 38 auch bei geringer Drehzahl schnell mit Fluid zu befüllen.

Es ist selbstverständlich möglich, bei dem vorangehend beschriebenen System Variationen im Umfang der vorliegenden Erfindung vorzunehmen. So kann beispielsweise die Drehdurchführung 78 nicht durch radial sich gegenüberliegende Bauteile, sondern an axial sich gegenübertiegenden Bauteilen realisiert sein. Auch ist es möglich, die Lamellenkupplung 38 permanent mit Fluid zu füllen, also einen Fluidaustausch des Innenraums nicht vorzusehen, da dessen thermische Belastung auf Grund des speziellen Einsatzbereichs vergleichsweise gering sein wird. Es ist dann lediglich eine Fluidzufuhr bzw. abfuhr zum Verschieben des Kolbenelementes 146 erforderlich.

## Patentansprüche

1. Hybrid-Antriebssystem, umfassend eine nasslaufende Lamellenkupplung (38) mit einem mit einem Antriebsaggregat zu koppelnden Eingangsbereich (36) und einem Ausgangsbereich (42, 44), eine Elektromaschine (64) mit einer Statoranordnung (70) und einer Rotoranordnung (62), wobei die Rotoranordnung (62) mit dem Ausgangsbereich (42, 44) der nasslaufenden Lamellenkupplung (38) zur gemeinsamen Drehung um eine Drehachse (A) gekoppelt ist, mit einem Übertragungsglied (48), das an einer Stützanordnung (74) drehbar gelagert ist und mit dieser eine Drehdurchführung (78) für die Zufuhr und Abfuhr von Fluid in und aus dem Gehäuse (36) der Lamellenkupplung (38) bildet, und mit einer Fluidpumpe (88) zum Zuführen/Abführen von Fluid zu/von der Lamellenkupplung (38),
**dadurch gekennzeichnet,**
**dass** ein hydrodynamischer Drehmomentwandler (90) einerseits und die Elektromaschine (64) mit der Lamellenkupplung (38) andererseits als separate Baugruppen beim Zusammenbau eines Antriebsstrangs einzugliedern sind, und die Rotoranordnung (62) der Elektromaschine (64) mit dem Ausgangsbereich (42, 44) der nasslaufenden Lamellenkupplung (38) über das Übertragungsglied (48) gekoppelt ist, wobei das Übertragungsglied (48) mit einem Gehäuse (94) des hydrodynamischen Drehmomentwandlers (90) durch Axialsteckverbindung gekoppelt ist, und dass die Fluidpumpe (88) alternativ oder zusätzlich zu dem Antrieb durch den hydrodynamischen Drehmomentwandler (90) durch einen elektromotorischen Antrieb (92) aktivierbar ist.

2. Hybrid-Antriebssystem nach Anspruch 1,
**dadurch gekennzeichnet, dass** die Elektromaschine (64) die nasslaufende Lamellenkupplung (38) axial überlappt.

3. Hybrid-Antriebssystem nach Anspruch 1,
**dadurch gekennzeichnet, dass** am Gehäuse (94) des hydrodynamischen Drehmomentwandlers (90) ein mit Außenverzahnung versehener Ansatz (96) vorgesehen ist, der in eine entsprechende mit Innenverzahnung versehene Öffnung (98) am axialen Ende des Übertragungsglieds (48) eingreift.

## Claims

1. Hybrid transmission system, comprising a wet-running multiplate clutch (38) having an input region (36) for coupling to a drive unit and having an output region (42, 44), comprising an electric machine (64) having a stator arrangement (70) and having a rotor arrangement (62), with the rotor arrangement (62) being coupled to the output region (42, 44) of the wet-running multiplate clutch (38) for common rotation about a rotational axis (A), having a transmission element (48) which is rotatably mounted on a support arrangement (74) and, with the latter, forms a rotary leadthrough (78) for the supply and discharge of fluid into and out of the housing (36) of the multiplate clutch (38), and having a fluid pump (88) for supplying/discharging fluid to/from the multiplate clutch (38), **characterized**
**in that** a hydrodynamic torque converter (90) firstly and the electric machine (64) with the multiplate clutch (38) secondly are incorporated as separate subassemblies during the assembly of a drive train, and the rotor arrangement (62) of the electric machine (64) is coupled to the output region (42, 44) of the wet-running multiplate clutch (38) by means of the transmission element (48), with the transmission element (48) being coupled to a housing (94) of the hydrodynamic torque converter (90) by means of an axial plug-type connection, and in that the fluid pump (88) may be activated alternatively or additionally by an electromotive drive (92) in addition to the drive by the hydrodynamic torque converter (90).

2. Hybrid transmission system according to Claim 1,
**characterized in that** the electric machine (64) axially overlaps the wet-running multiplate clutch (38).

3. Hybrid transmission system according to Claim 1,
**characterized in that** a projection (96) which is provided with an external toothing is provided on the housing (94) of the hydrodynamic torque converter (90), which projection (96) engages into a corresponding opening (98), which is provided with an internal toothing, on the axial end of the transmission element (48).

## Revendications

1. Système d'entraînement hybride, comprenant un embrayage multidisques humide (38) avec une région d'entrée (36) à accoupler à une unité d'entraînement et une région de sortie (42, 44), un moteur électrique (64) avec un agencement de stator (70) et un agencement de rotor (62), l'agencement de rotor (62) étant accouplé à la région de sortie (42, 44) de l'embrayage multidisques humide (38) en vue de leur rotation commune autour d'un axe de rotation (A), avec un organe de transfert (48) qui est monté à rotation sur un agencement de support (74) et forme avec celui-ci un passage rotatif (78) pour l'alimentation et l'évacuation de fluide dans et hors du boîtier (36) de l'embrayage multidisques (38), et avec une pompe fluidique (88) pour l'alimentation/l'évacuation de fluide à et depuis l'embrayage multidisques (38),
**caractérisé en ce**
**qu'**un convertisseur de couple hydrodynamique (90) d'une part et le moteur électrique (64) avec l'embrayage multidisques (38) d'autre part doivent être intégrés sous forme de modules séparés lors de l'assemblage d'une chaîne de transmission, et l'agencement de rotor (62) du moteur électrique (64) est accouplé à la région de sortie (42, 44) de l'embrayage multidisques humide (38) par le biais de l'organe de transfert (48), l'organe de transfert (48) étant accouplé à un boîtier (94) du convertisseur de couple hydrodynamique (90) par connexion par enfichage axiale, et en ce que la pompe fluidique (88) peut être activée en variante ou en plus de l'entraînement par le convertisseur de couple hydrodynamique (90) par un entraînement par moteur électrique (92).

2. Système d'entraînement hybride selon la revendication 1,
**caractérisé en ce que**
le moteur électrique (64) chevauche axialement l'embrayage multidisques humide (38).

3. Système d'entraînement hybride selon la revendication 1,
**caractérisé en ce que** l'on prévoit sur le boîtier (94) du convertisseur de couple hydrodynamique (90) une pièce rapportée (96) pourvue d'une denture extérieure, qui vient en prise dans une ouverture correspondante (98) pourvue d'une denture intérieure, à l'extrémité axiale de l'organe de transfert (48).
